(19) Europäisches Patentamt
European Patent Office
Office européen des brevets

(11) **EP 3 760 322 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **20180093.5**

(22) Anmeldetag: **15.06.2020**

(51) Internationale Patentklassifikation (IPC):
**B07B 1/15** (2006.01)   B65G 33/10 (2006.01)
**B65G 33/18** (2006.01)

(52) Gemeinsame Patentklassifikation (CPC):
**B07B 1/15;** B65G 33/10; B65G 33/18

(54) **DOSIERFÖRDERER ZUM FÖRDERN UND DOSIEREN EINES FESTSTOFFGEMISCHES**

DOSING CONVEYOR FOR CONVEYING AND DOSING A MIXTURE OF SOLIDS

DISPOSITIF DE TRANSPORT DE DOSAGE DESTINÉ AU TRANSPORT ET AU DOSAGE D'UN MÉLANGE SOLIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2019 DE 102019117744**

(43) Veröffentlichungstag der Anmeldung:
**06.01.2021 Patentblatt 2021/01**

(73) Patentinhaber: **Günther Holding GmbH & Co. KG 36367 Wartenberg (DE)**

(72) Erfinder: **GÜNTHER, Bernhard 36367 Wartenberg (DE)**

(74) Vertreter: **SSM Sandmair Patentanwälte Rechtsanwalt Partnerschaft mbB Joseph-Wild-Straße 20 81829 München (DE)**

(56) Entgegenhaltungen:
EP-B1- 2 914 386       CN-A- 104 555 298
GB-A- 375 956          NZ-A- 591 638
US-A- 731 073

# EP 3 760 322 B1

## Beschreibung

Die Erfindung betrifft einen Dosierförderer für Feststoffgemische, d. h. eine Vorrichtung zum Fördern und Dosieren eines Feststoffgemisches, wie etwa Siedlungsabfall und Naturgesteine. Das Feststoffgemisch enthält Feststoffe unterschiedlicher Größe und Gewicht, optional auch unterschiedlicher Art. Das Feststoffgemisch kann ein reines Trockengemisch sein, grundsätzlich aber auch Wasser oder andere Flüssigkeiten in nennenswerter Menge enthalten.

Bei der Förderung von Gemischen von Feststoffen unterschiedlicher Form, Größe und Gewicht kommt es leicht zur Staubildung oder gar Verstopfung, was die pro Zeiteinheit förderbare Menge des Feststoffgemisches begrenzt. Für den effizienten Betrieb von Einrichtungen zur Behandlung von Feststoffgemischen ist es jedoch wesentlich, dass das Gemisch der betreffenden Einrichtung mit einer geeigneten Förderrate möglichst gleichmäßig zugeführt wird.

In der Behandlung von Siedlungsabfall, Bodenaushub, Naturgestein und vielem mehr wird das jeweilige Feststoffgemisch beispielsweise mittels Bagger einer Aufnahmeeinrichtung aufgegeben und von dort einer nachgeordneten Behandlungseinrichtung zugeführt. So ist aus der EP 2 914 386 B eine Vorrichtung mit einem Walzensieb bekannt, dem das zu behandelnde Feststoffgemisch mittels eines Förderbands zugeführt wird. Förderbänder fördern der jeweils nachgeordneten Behandlungsvorrichtung das Feststoffgemisch in etwa so zu, wie es dem Förderband aufgegeben wurde. Um eine gleichmäßigere Förderung zu erzielen, kann das jeweilige Fördermittel in Vibration versetzt werden, was jedoch zusätzlichen Antriebs- und Lagerungsaufwand mit sich bringt.

Aus der DE 39 26 451 C1 ist ein Rollenrost zum Absieben und Klassieren von Schüttgütern bekannt. Das Rollenrost umfasst mehrere in einem Rostgestell gelagerte und gleichsinnig angetriebene Rostwalzen mit Rostscheiben. Die Rostwalzen sind dabei derart voneinander beabstandet, dass die Rostscheiben benachbarter Rostwalzen Klassieröffnungen bilden, durch welche kleinere Schüttgüter hindurch fallen können. Diese kleineren Schüttgüter fallen auf einen schräg angeordneten Rostunterlauf unter dem Rollenrost und rutschen über den Rostunterlauf zu einem Rostabwurf.

Die US 731 073 A offenbart einen Dosierförderer nach dem Oberbegriff des Anspruchs 1.

Es ist eine Aufgabe der Erfindung, Feststoffgemische zu fördern und in dosierter Menge auszutragen und eine hierfür geeignete Förder- und Dosiervorrichtung, einen "Dosierförderer", zu schaffen.

Eine andere oder weitere Aufgabe ist es, ein der Vorrichtung im zeitlichen Verlauf in ungleichmäßigen Mengen aufgegebenes Feststoffgemisch mit einer gleichmäßigeren Förderrate auszutragen.

Diese Aufgaben werden durch einen Dosierförderer nach Anspruch 1 gelöst.

Nach der Erfindung dienen ein Walzensieb und ein unter dem Walzensieb erstreckter Auffangboden in Kombination als Dosierförderer zum Fördern und gleichzeitigen Dosieren eines dem Walzensieb aufgebbaren Feststoffgemisches. Bei dem Feststoffgemisch kann es sich, wie eingangs erwähnt, beispielsweise um Siedlungsabfall, Bodenaushub, Naturgestein, wie etwa Bruchstein, grundsätzlich aber auch um Feldfrüchte handeln.

Das Walzensieb umfasst mehrere nebeneinander angeordnete Schraubenwalzen. Bei Drehantrieb der Schraubenwalzen wird von dem auf die Oberseite des Walzensiebs aufgegebenen Feststoffgemisch eine Überkornfraktion aus größeren Feststoffpartikeln in eine Förderrichtung, die parallel zu den Walzenlängsachsen weist, bis in einen Siebausgabebereich gefördert, während eine Unterkornfraktion aus kleineren Feststoffpartikeln durch die zwischen benachbarten Schraubenwalzen und den ineinandergreifenden, spiralig umlaufenden Wendeln der Schraubenwalzen vorhandenen Sieblücke nach unten fällt. Der Auffangboden erstreckt sich unmittelbar unter dem Walzensieb in Walzenlängsrichtung und quer zur Walzenlängsrichtung über mehrere, vorzugsweise alle Schraubenwalzen des Walzensiebs. Der Auffangboden erstreckt sich in Förderrichtung bis zu einem abwärtigen Bodenausgaberand. Der Bodenausgaberand ist vorzugsweise ein freies Ende des Aufgabebodens. Im Förder- und Dosierbetrieb fängt der Auffangboden die im Überlappungsbereich von Walzensieb und Auffangboden durch die Sieblücken fallende Unterkornfraktion auf.

Der Auffangboden reicht an der Unterseite des Walzensiebs so dicht an die Schraubenwalzen heran, dass die Schraubenwalzen mit ihren umlaufenden Wendeln die auf dem Auffangboden befindliche Unterkornfraktion in Förderrichtung zum Bodenausgaberand fördern. Die Schraubenwalzen schieben die Unterkornfraktion auf dem Auffangboden in Förderrichtung bis zum und über den Bodenausgaberand. Der Auffangboden kann längs des Bodenausgaberands so beschaffen sein, dass die Unterkornfraktion beim Überschieben des Bodenausgaberands einfach frei nach unten fällt. Alternativ kann der Auffangboden an den Bodenausgaberand anschließend eine Art Rutsche bilden, auf der das über den Bodenausgaberand geförderte Unterkorn aufgrund Schwerkraft nach unten rutscht.

Das Walzensieb kann aus zwei Schraubenwalzen bestehen. In vielen Anwendungen ist es jedoch vorteilhaft, wenn es von drei oder mehr Schraubenwalzen gebildet wird. Der Siebausgabebereich ist an einem axialen Walzenende gelegen. Die Förderrichtung ist in derartigen Ausführungen zumindest im Wesentlichen parallel zur Walzenlängsrichtung, vorzugsweise sind Förderrichtung und Walzenlängsrichtung gleich. Grundsätzlich kann der Siebausgabebereich aber auch längs eines äußeren Umfangsrands einer äußeren Schraubenwalze des Walzensiebs gebildet sein, so dass die Förderrichtung der auf dem Walzensieb geförderten Überkornfraktion zumindest auch eine wesentliche Richtungskomponente quer zur Walzenlängsrichtung hat.

Für eine ungestörte, gleichmäßige Förderung der Unterkornfraktion auf dem Auffangboden ist es vorteilhaft, wenn der Auffangboden einen für die Unterkornfraktion undurchlässigen und in Förderrichtung kontinuierlich glatten Auffangboden bildet. An Unebenheiten und in Löchern können sich Partikel der Unterkornfraktion festsetzen und die Förderung in Richtung Bodenausgaberand erschweren. Dies kann zu Ungleichmäßigkeiten in der Förderung, zumindest auch zu einem erhöhten Leistungsbedarf für den Antrieb der Schraubenwalzen führen. So werden beispielsweise in Löchern oder andersartigen Durchgängen geklemmte Unterkornpartikel von den Wendeln der drehenden Schraubenwalzen regelrecht abrasiert. Dem kann durch einen undurchlässigen Auffangboden, der an seiner dem Walzensieb zugewandten Oberfläche in Förderrichtung, vorzugsweise in Walzenlängsrichtung, kontinuierlich glatt ist, entgegengewirkt werden.

Der Auffangboden kann an die Unterseite des Walzensiebs angeschmiegt geformt sein. Ist das Walzensieb plan oder zumindest an seiner Unterseite plan, kann auch der Auffangboden plan und in einem geringen Abstand unter den Schraubenwalzen angeordnet sein. Wölbt sich das Walzensieb an einem oder an beiden Seitenrändern nach oben, kann der Auffangboden entsprechend angeschmiegt ebenfalls gewölbt sein, um auch am seitlichen Rand des Walzensiebs einen vorteilhaft nur geringen Abstand vom Walzensieb zu haben. Der Auffangboden kann in derartigen Ausführungen eine überall glatte, entweder einfach plane oder gewölbte, aus planen Abschnitten zusammengesetzte Auffangfläche bilden, die zu einer an die Schraubenwalzen an der Unterseite des Walzensiebs angelegte Hüllfläche nur einen geringen Abstand aufweist. Der Auffangboden kann in derartigen Ausführungen einen geringsten Abstand in Walzenlängsrichtung nur linienförmig zu den jeweils untersten Punkten der Wendeln der Schraubenwalzen aufweisen.

Der Abstand von Walzensieb und Auffangboden ist so groß, dass ein freies Drehen der Schraubenwalzen bzw. der Wendeln der Schraubenwalzen gewährleistet ist, die Wendeln also nicht auf dem Auffangboden schleifen. Andererseits ist der Abstand so klein, dass sich auf dem Auffangboden keine permanent liegende Unterkornschicht bilden kann, während sich die Schraubenwalzen drehen.

In einer Weiterentwicklung umfasst der Auffangboden in Walzenlängsrichtung erstreckte Umschlingungsabschnitte oder setzt sich insgesamt aus nebeneinander verlaufenden Umschlingungsabschnitten zusammen, wobei jeweils einer der Umschlingungsabschnitte eine der Schraubenwalzen an ihrer Unterseite umschlingt. Der Auffangboden kann an seiner dem Walzensieb zugewandten Oberfläche rinnenförmig sein. Insbesondere kann der Auffangboden unmittelbar nebeneinander verlaufende rohrförmige, nach oben offene Umschlingungsabschnitte umfassen, was auch Ausgestaltungen einschließt, in denen der Auffangboden insgesamt aus derartigen Umschlingungsabschnitten besteht. Benachbarte Umschlingungsabschnitte ragen jeweils zwischen benachbarten Schraubenwalzen nach oben. Aufgrund der Umschlingungsabschnitte kann die wirksame Eingriffslänge, mit der die Schraubenwalzen in die auf dem Auffangboden befindliche Unterkornfraktion eingreifen und im Eingriff in Förderrichtung auf die Unterkornfraktion wirken, vergrößert werden. In derartigen Ausführungen kann ein wie vorstehend erläutert vorteilhaft geringer Abstand über die Winkelerstreckung der Umschlingung bestehen.

Die Umschlingungsabschnitte können sich in Querschnitten von Walzensieb und Auffangboden gesehen jeweils über einen Umschlingungswinkel, gemessen um die Drehachse der jeweiligen Schraubenwalze, von wenigstens 20° oder wenigstens 30° oder wenigstens 40° erstrecken. Der Auffangboden hat in derartigen Ausführungen die Form von aneinander liegenden, dem Walzensieb zugewandt offenen Rinnen. Die Rinnen können in Walzenlängsrichtung insbesondere zylindrisch sein. Variiert andererseits der Durchmesser der Schraubenwalzen in Längsrichtung, können die Radien der Rinnen in Anpassung an den lokalen Schraubenwalzenquerschnitt zum Erhalt eines gleichmäßig geringen Abstands korrespondierend variieren. Der Umschlingungswinkel ist in vorteilhaften Ausführungen gleich oder größer als 60° und kann durchaus bis zu 150° betragen. Bevorzugt beträgt der Umschlingungswinkel 90° oder mehr.

Der Auffangboden kann insbesondere ein flächenhaftes Gebilde sein und dementsprechend eine in Walzenlängsrichtung gemessene Länge und eine quer zur Walzenlängsrichtung gemessene Breite aufweisen, die jeweils wesentlich größer als eine orthogonal zur Länge und zur Breite gemessene Dicke des Auffangbodens sind. Der Auffangboden kann beispielsweise ein blechartiges Flächengebilde sein.

Der Dosierförderer fördert das aufgegebene Feststoffgemisch in zwei Materialströmen in Förderrichtung, den einen Materialstrom, die Unterkornfraktion, an der Unterseite des Walzensiebs zum Bodenausgaberand und den anderen Materialstrom, die Überkornfraktion, an der Oberseite des Walzensiebs zum Siebausgabebereich. Das Unterkorn kann von Störungen durch das Überkorn weitgehend frei und das Überkorn kann von Störungen durch das Unterkorn weitgehend frei zum jeweils zugeordneten Ausgabebereich gefördert werden. Fördermengenschwankungen bei der Aufgabe des Feststoffgemischs auf das Walzensieb, bei Aufgabe beispielsweise mittels eines Baggers, werden zu einem guten Teil kompensiert, die Förderraten am Bodenausgaberand und am Siebausgabebereich werden vergleichmäßigt.

Ein Drehantrieb für die Schraubenwalzen kann dazu eingerichtet sein, die Förderrate des Dosierförderers in Abhängigkeit von der Rate, mit der das Feststoffgemisch dem Walzensieb aufgegeben wird, zu verändern und durch entsprechende Erhöhung oder Verringerung der Drehgeschwindigkeit der Schraubenwalzen flexibel anzupassen. Grundsätzlich gleicht der erfindungsgemäße Dosierförderer aber auch bei einem Antrieb mit nur konstanter Drehgeschwindigkeit Schwankungen in der Rate, mit der das Feststoffgemisch aufgegeben wird, in weiten Grenzen aus.

Erfindungsgemäß ragt das Walzensieb in Förderrichtung über einen oder mehrere Teilabschnitte des Bodenausgaberands vor. Bevorzugt ragt das Walzensieb über seine gesamte quer zur Walzenlängsrichtung gemessene Breite längs des Bodenausgaberands über den Auffangboden in Walzenlängsrichtung vor. Der Siebausgabebereich des Walzensiebs liegt somit in Förderrichtung abwärts von, d. h. hinter dem einen oder den mehreren Teilabschnitten des Bodenausgaberands oder bevorzugt überall hinter dem Bodenausgaberand. Zumindest ein Teil der Unterkornfraktion verlässt den Auffangboden somit in Förderrichtung vor dem Siebausgabebereich des Walzensiebs. Ein in Förderrichtung gemessener Abstand zwischen Siebausgabebereich und Bodenausgaberand ist so groß, dass die Überkornfraktion, falls sie im Siebausgabebereich vom Walzensieb fällt, getrennt von der Unterkornfraktion aufgefangen werden kann. Ragt das Walzensieb nur in einem oder mehreren Teilabschnitten des Bodenausgaberands über den Auffangboden vor, gilt dies in Bezug auf denjenigen Teil der Unterkornfraktion, der in dem einen oder den mehreren in Bezug auf die Förderrichtung zurückstehenden Teilabschnitten des Bodenausgaberands vom Auffangboden fällt. Wenn an dieser Stelle davon die Rede ist, dass die Überkornfraktion vom Walzensieb und die Unterkornfraktion vom Auffangboden fallen, soll damit zunächst einmal nur der Abstand von Siebausgabebereich und Bodenausgaberand der Größe nach charakterisiert werden. In tatsächlichen Ausführungen des Dosierförderers muss/müssen das Überkorn nicht vom Walzensieb und/oder das Unterkorn nicht vom Auffangboden fallen oder getrennt aufgefangen werden, hier soll nur der Abstand der Größe nach charakterisiert werden. Die Fraktionen können auf nachgeordneten Förderstrukturen beispielsweise nach unten rutschen oder von einem gemeinsamen Förderer aufgefangen werden. Allerdings werden Ausführungen bevorzugt, in denen tatsächlich die Überkornfraktion frei vom Walzensieb und die Unterkornfraktion frei vom Auffangboden fallen und von unterschiedlichen Fördereinrichtungen, einem Überkornförderer und einem Unterkornförderer, voneinander getrennt aufgefangen und abgefördert werden.

Hinsichtlich des Abstands von Siebausgabebereich und Ausgaberand gilt in bevorzugten Ausführungen, in denen mehrere oder alle Schraubenwalzen in Walzenlängsrichtung vorragen, dass die betreffenden Schraubenwalzen mit wenigstens 1/5 der für die Förderung des Überkorns wirksamen Länge $L_W$ der jeweiligen Schraubenwalze über den einen oder die mehreren Teilabschnitte des Ausgaberands, vorzugsweise über den gesamten Ausgaberand des Auffangbodens in Förderrichtung vorragen. Als wirksame Länge $L_W$ wird für jede der Schraubenwalzen die Länge bezeichnet, über die sich eine Wendel erstreckt, also diejenige Walzenlänge, über die bei Drehantrieb der jeweiligen Schraubenwalze eine Förderwirkung in Walzenlängsrichtung ausgeübt wird. Wird mit $L_F$ derjenige Längenabschnitt der wirksamen Länge $L_W$ bezeichnet, mit dem die jeweilige Schraubenwalze über den Auffangboden vorragt, also der axiale Überstand, so gilt für das Verhältnis $L_F/L_W$ in vorteilhaften Ausführungen wenigstens eine der Relationen:

$$L_F/L_W \geq 1/5 \text{ oder } L_F/L_W \geq 1/4 \text{ oder } L_F/L_W \geq 1/3.$$

Andererseits ist es für einen lokal definierten Austrag der Unterkornfraktion günstig, wenn wenigstens eine der folgenden Relationen gilt:

$$L_F/L_W \leq 3/4 \text{ oder } L_F/L_W \leq 2/3 \text{ oder } L_F/L_W \leq 1/2.$$

Für einen großen Teil der Feststoffgemische ist ein Verhältnis $L_F/L_W$ aus dem Bereich von wenigstens 1/4 und höchstens 1/2 günstig.

Die Schraubenwalzen und der Auffangboden überlappen in Förderrichtung bis wenigstens zum Bodenausgaberand und, wie weiter oben erwähnt, in Walzenlängsrichtung Die überlappende Länge von Auffangboden und jeweiliger Schraubenwalze sei insgesamt als "Überlappungslänge" $L_A$ bezeichnet. Erfindungsgemäß ragen die Schraubenwalzen, wie ebenfalls erwähnt, jeweils in die zur Walzenlängsrichtung parallele Förderrichtung über den Bodenausgaberand vor. Bezeichnet man die Länge, mit der die jeweilige Schraubenwalze vorragt, als "Freiänge" $L_F$, im Sinne von "frei vom Auffangboden", so gilt hinsichtlich des in Walzenlängsrichtung gemessenen Abstands von Siebausgabebereich und Bodenausgaberand erfindungsgemäß für das Verhältnis von Freilänge zu Überlappungslänge alternativ oder ergänzend zum vorstehenden Absatz: $L_F/L_A \geq 1/5$ oder vorzugsweise $L_F/L_A \geq 1/4$ bzw. $L_F/L_A \geq 1/3$

Andererseits ist es für einen lokal definierten Austrag der Unterkornfraktion günstig, wenn wenigstens eine der folgenden Relationen gilt:

$$L_F/L_A \leq 3 \text{ oder } L_F/L_A \leq 2 \text{ oder } L_F/L_A \leq 1.$$

Insbesondere kann $1/4 \leq L_F/L_A \leq 3/2$, vorzugsweise $L_F/L_A = 1/2$ sein.

Die Überlappungslänge und/oder die Freilänge kann/können von Schraubenwalze zu Schraubenwalze variieren, d. h. sie müssen nicht für alle Schraubenwalzen gleich sein, bevorzugt sind sie jedoch für alle Schraubenwalzen gleich. Bevorzugt wird, wenn die jeweilige Schraubenwalze die Überkornfraktion über ihre gesamte Freilänge in Walzenlängsrichtung bis zum Siebausgabebereich weiterfördert.

Die Schraubenwalzen können nicht erfindungsgemäß an beiden axialen Enden gelagert sein. Der Siebausgabebereich erstreckt sich in derartigen Ausführungen in Walzenlängsrichtung über einen axialen Walzenabschnitt, beispielsweise einen axialen Endabschnitt der Schraubenwalzen, in dem die Schraubenwalzen beispielsweise schlanker als über den Rest ihrer Länge(n) sind. Erfindungsgemäß sind die Schraubenwalzen jedoch nur einseitig gelagert und ragen vom jeweiligen Lager axial frei vor. Der Siebausgabebereich kann bei nur einseitiger Lagerung unmittelbar an den freien axialen Enden der Schraubenwalzen gelegen und dementsprechend ein freier Siebausgaberand sein, wobei das Überkorn im Siebausgabebereich, respektive Siebausgaberand, an den freien Walzenenden vom Walzensieb fällt oder gegebenenfalls rutscht.

Der Dosierförderer kann eine Begrenzungsstruktur als weitere Funktionskomponente umfassen. Die Begrenzungsstruktur kann eine rechte Begrenzungswand längs eines rechten Seitenrands des Walzensiebs und/oder eine linke Begrenzungswand längs eines linken Seitenrands des Walzensiebs umfassen, wobei die jeweilige Begrenzungswand verhindert, dass die Überkornfraktion quer zur Förderrichtung, also quer zur Walzenlängsrichtung, vom Walzensieb gefördert werden kann.

In Weiterentwicklungen kann die Begrenzungsstruktur eine rechte Begrenzungswand längs des rechten Seitenrands des Walzensiebs, eine linke Begrenzungswand längs des linken Seitenrands des Walzensiebs und eine rückwärtige Begrenzungswand, über welche die Schraubenwalzen in Förderrichtung, vorzugsweise in Walzenlängsrichtung vorragen, wobei die Begrenzungsstruktur das Walzensieb an drei Seiten einrahmt, aber in Förderrichtung, vorzugsweise in Walzenlängsrichtung, offen ist.

Die Begrenzungsstruktur kann nach oben offen und trichterartig geweitet sein, so dass das Feststoffgemisch dem Walzensieb von oben und in Draufsicht innerhalb der Begrenzungsstruktur auf das Walzensieb fallend aufgebbar ist.

Die Begrenzungsstruktur kann nach unten bis zum Auffangboden oder bis nahe zum Auffangboden reichen, um zu verhindern, dass die Unterkornfraktion an den Rändern und/oder am rückwärtigen Ende des Walzensiebs vom Auffangboden fallen kann. Die jeweilige Begrenzungswand kann mit dem Auffangboden dicht verbunden sein, beispielsweise stoffschlüssig, oder am Auffangboden stattdessen in Überlappung auch nur lose anliegen.

Nachfolgend wird ein Ausführungsbeispiel der Erfindung anhand von Figuren erläutert.

Figur 1     einen Dosierförderer in einer perspektivischen Sicht auf eine Oberseite eines Walzensiebs,
Figur 2     den Dosierförderer in einer perspektivischen Sicht auf eine Unterseite,
Figur 3     den Dosierförderer in einer frontalen Sicht auf eine Siebausgabe und einen Bodenausgaberand,
Figur 4     einen Teil des Dosierförderers in einem zur Walzenlängsrichtung orthogonalen Querschnitt,
Figur 5     einen Teil eines modifizierten Dosierförderers in einem zur Walzenlängsrichtung orthogonalen Querschnitt,
Figur 6     den Dosierförderer in einer vertikalen Draufsicht auf die Oberseite des Walzensiebs,
Figur 7     den Dosierförderer in einer Seitenansicht,
Figur 8     den Dosierförderer mit nachgeordnetem Förderer und
Figur 9     den Dosierförderer mit zwei nachgeordneten Förderern.

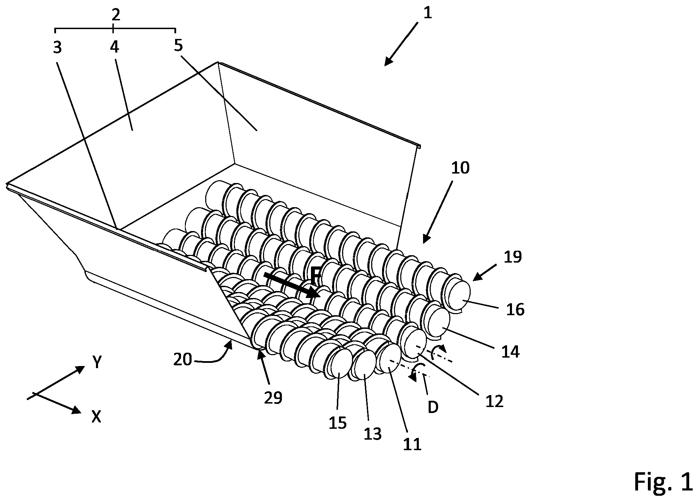

Figur 1 zeigt einen erfindungsgemäßen Dosierförderer 1. Der Dosierförderer 1 umfasst ein Walzensieb 10 mit mehreren nebeneinander angeordneten Schraubenwalzen 11 bis 16. Figur 1 ist eine perspektivische Sicht auf die Oberseite des Walzensiebs 10. Die Schraubenwalzen 11 bis 16 sind um parallele Drehachsen D drehbar nebeneinander gelagert. Die Drehachsen D weisen jeweils in Walzenlängsrichtung X. Die Schraubenwalzen 11 bis 16 weisen jeweils einen zentralen Walzenkörper und um diesen schraubenförmig umlaufend eine radial vorstehende Wendel auf. Benachbarte Schraubenwalzen 11 bis 16 greifen mit ihren Wendeln jeweils ineinander, so dass in Querrichtung Y zur Walzenlängsrichtung X von den Walzenkörpern und in Walzenlängsrichtung X von den ineinandergreifenden Wendeln begrenzte Sieblücken erhalten werden.

Wird auf die Oberseite des Walzensiebs 10 ein Feststoffgemisch aufgegeben, fällt eine Unterkornfraktion aus kleineren Partikeln des Feststoffgemisches durch die Sieblücken des Walzensiebs 10 nach unten, während den Sieblücken entsprechend eine Überkornfraktion aus größeren Partikeln auf dem Walzensieb 10 in eine Förderrichtung F zu einem Siebausgabebereich 19 gefördert wird. Die Förderrichtung F fällt mit der Walzenlängsrichtung X zusammen. Bei dem Feststoffgemisch kann es sich um Naturgestein, beispielsweise Bruchgestein, Erdaushub oder Bauschutt oder andere Arten von Siedlungsabfall handeln.

Das Walzensieb 10 bildet eine in Querrichtung Y konvex nach unten gewölbte Siebfläche. Zur Ausbildung einer derartigen Siebfläche sind die Schraubenwalzen 11 bis 16 so angeordnet, dass die Drehachsen D von einer Walzensiebmitte in Querrichtung Y nach beiden Seiten ansteigend angeordnet sind. Das Walzensieb 10 steigt somit in Querrichtung Y von der Siebflächenmitte ausgehend zu beiden seitlichen Längsrändern hin an. Die auf der rechten Siebseite äußere Schraubenwalze 15 bildet an ihrem äußeren Umfang einen rechten Seitenrand und die auf der linken Siebseite äußere Schraubenwalze 16 bildet an ihrem äußeren Umfang einen linken Seitenrand des Walzensiebs 10.

Der Dosierförderer 1 umfasst einen Drehantrieb für die Schraubenwalzen 11 bis 16. Der Drehantrieb kann insbesondere dafür eingerichtet sein, eine rechte Walzengruppe von Schraubenwalzen 11, 13 und 15 in die eine Drehrichtung und eine linke Walzengruppe mit Schraubenwalzen 12, 14 und 16 in die andere Drehrichtung drehend anzutreiben. Entsprechend haben die Wendeln der linken Walzengruppe 11, 13, 15 einen gleichen ersten Drehsinn und die Wendeln der linken Walzengruppe 12, 14, 16 einen untereinander gleichen, aber zu den Schraubenwalzen 11, 13 und 15 der rechten Walzengruppe gegenläufigen Drehsinn. Der Drehsinn der Schraubenwendeln und die Drehrichtung der Schraubenwalzen der jeweiligen Walzengruppe werden so gewählt, dass die Überkornfraktion des dem Walzensieb 10 aufgegebenen Feststoffgemisches auf den Schraubenwalzen der rechten Walzengruppe 11, 13, 15 zum rechten Seitenrand und auf den Schraubenwalzen der linken Walzengruppe 12, 14, 16 zum linken Seitenrand des Walzensiebs 10 gefördert wird. Wegen des beidseitigen Anstiegs des Walzensiebs 10 in Querrichtung Y an den Seitenrändern wird die auf der Oberseite des Walzensiebs 10 geförderte Überkornfraktion aufgrund Schwerkraft in Richtung Walzenmitte zurückgedrängt, indem die in den seitlichen Anstiegsbereich geförderten Überkornpartikel aufgrund Schwerkraft wieder in Richtung Walzensiebmitte zurückfallen. Dies ist vorteilhaft, um die Überkornfraktion zu lockern, beispielsweise verhakte Überkornpartikel voneinander zu trennen oder Überkornpartikel von anhaftendem Bodenmaterial zu befreien.

In einer Modifikation kann die Siebfläche auch plan sein, indem die Drehachsen D der Schraubenwalzen 11-16 beispielsweise in einer Ebene angeordnet sind. Die Schraubenwalzen eines planen Walzensiebs können alle in die gleiche Drehrichtung drehen und die ineinandergreifenden Wendeln entsprechend den gleichen Drehsinn aufweisen. Alternativ können eine äußere rechte Walzengruppe und eine äußere linke Walzengruppe Wendeln mit gruppenweise einander entgegengerichteten Drehsinn aufweisen und der Drehantrieb dafür eingerichtet sein, die linke Walzengruppe und die rechte Walzengruppe gegenläufig anzutreiben. Für ein planes Walzensieb ist es zweckmäßig, wenn die linke und die rechte Walzengruppe bezüglich der Drehrichtung so angetrieben werden, dass sie das in der jeweiligen Walzengruppe aufschwimmende Überkorn zwar hauptsächlich in Walzenlängsrichtung, zusätzlich aber in Richtung Walzensiebmitte fördern.

Der Dosierförderer 1 umfasst eine Begrenzungsstruktur 2, die das Walzensieb 10 in einem vom Siebausgabebereich 19 entfernten rückwärtigen Siebbereich umgibt. Die Begrenzungsstruktur 2 umfasst eine rechte Begrenzungswand 3, eine rückwärtige Begrenzungswand 4 und eine linke Begrenzungswand 5. Die Begrenzungswände 3, 4 und 5 ragen an beiden Seitenrändern und an der Rückseite des Walzensiebs 10 über dieses nach oben hinaus. Die Begrenzungswände 3, 4 und 4 können vorteilhafterweise miteinander einen Aufnahmetrichter bilden, der sich vom Walzensieb 10 weg oben weitet und an seiner dem Siebausgabebereich 19 zugewandten Vorderseite offen ist. Das Überkorn wird dem Walzensieb 10 im Bereich der Begrenzungsstruktur 2, d. h. im rückwärtigen Bereich des Walzensiebs 10, aufgegeben.

Die Schraubenwalzen 11 bis 16 sind nur an ihren rückwärtigen Enden gelagert und ragen von den rückwärtigen Walzenenden in Walzenlängsrichtung X frei vor. Aufgrund dieser nur einseitigen Lagerung wird der Siebausgabebereich 19 an den freien Walzenenden des Walzensiebs 10 in Form eines Siebausgaberands erhalten. Das Überkorn fällt im Siebausgabebereich 19 über die freien Walzenenden nach unten. In einer Modifikation kann sich an den Siebausgabebereich 19 beispielsweise eine Rutsche oder dergleichen anschließen, so dass das Überkorn nicht frei nach unten fällt, sondern auf der Rutsche oder dergleichen nach unten rutschen kann.

Wesentlicher Bestandteil der Dosierförderer 1 ist neben dem Walzensieb 10 auch ein Auffangboden 20 für die Unterkornfraktion. Der Auffangboden 20 ist unmittelbar unter dem Walzensieb 10, hier dementsprechend unmittelbar unter den Schraubenwalzen 11 bis 16 angeordnet. Der Auffangboden 20 kann an seinen Seitenrändern mit den Begrenzungswänden 3 und 5 und an seinem rückwärtigen Rand mit der rückwärtigen Begrenzungswand 4 ausreichend dicht verbunden sein, um zu verhindern, dass Unterkorn über den rückwärtigen Rand oder die Seitenränder des Auffangbodens 20 gefördert werden kann. Auffangboden 20 und Begrenzungsstruktur 2 können somit gemeinsam einen Rückhaltebehälter für die Unterkornfraktion bilden, wobei dieser Rückhaltebehälter in Förderrichtung F allerdings offen ist. An seinem in Bezug auf die Förderrichtung F abwärtigen Ende weist der Auffangboden 20 noch unter den Schraubenwalzen 11-16 einen freien Bodenausgaberand 29 auf, über den das Unterkorn ausgetragen wird.

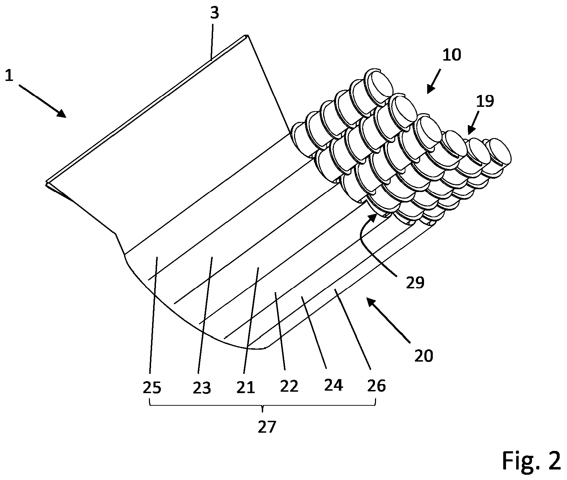

Figur 2 zeigt den Dosierförderer 1 in einer perspektivischen Sicht auf die Unterseite des Walzensiebs 10 und den dort angeordneten Auffangboden 20. Der Bodenausgaberand 29 bildet das freie vordere Ende des Auffangbodens 20. Das Unterkorn wird von den Schraubenwalzen 11 bis 16 dementsprechend über den Bodenausgaberand 29 gefördert, so dass es am Bodenausgaberand 29 vom Auffangboden 20 frei nach unten fallen kann. In einer Modifikation kann in Förderrichtung F unmittelbar an den Bodenausgaberand 29 anschließend eine Rutsche oder dergleichen gebildet sein, so dass über den Bodenausgaberand 29 gefördertes Unterkorn nicht frei nach unten fallen, sondern auf der Rutsche oder dergleichen nach unten rutschen kann.

Um die Förderung der Unterkornschicht zu verbessern, umfasst der Auffangboden 20 mehrere in Walzenlängsrichtung X erstreckte Umschlingungsabschnitte 21 bis 26, die zu den Schraubenwalzen 11-26 korrespondierend nebeneinander angeordnet sind. In der korrespondierenden Anordnung umschlingen der Umschlingungsabschnitt 21 die Schraubenwalze 11, der Umschlingungsabschnitt 22 die Schraubenwalze 12, der Umschlingungsabschnitt 23 die Schraubenwalze 13, der Umschlingungsabschnitt 24 die Schraubenwalze 14, der Umschlingungsabschnitt 25 die Schraubenwalze 15 und der Umschlingungsabschnitt 26 die Schraubenwalze 16.

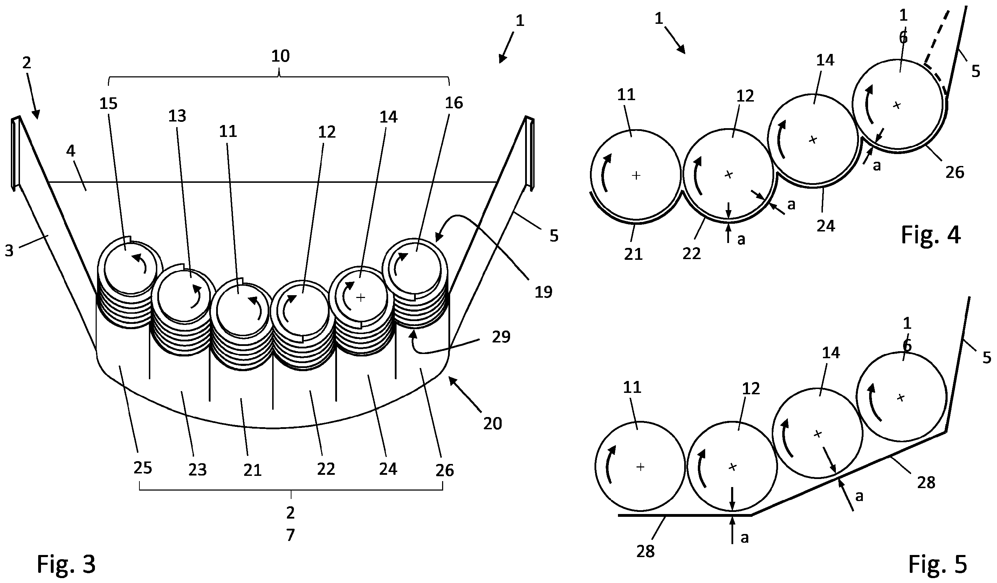

In Figur 3 ist der Dosierförderer 1 in einer frontalen Sicht auf den Siebausgabebereich 19 und den Bodenausgaberand 29 dargestellt, so dass die Umschlingung der Walzenunterseiten durch den Auffangboden 20 gut zu erkennen ist.

Figur 4 zeigt den rechten Teil des Dosierförderers 1 mit der rechten Walzengruppe 12, 14, 16, den zugehörigen Umschlingungsabschnitten 22, 24 und 26 und der rechten Begrenzungswand 5 in einem zur Walzenlängsrichtung X orthogonalen Querschnitt. Die Anordnung aus linker Walzengruppe 11, 13, 15, zugehörigen Umschlingungsabschnitten 21, 23 und 25 und linker Begrenzungswand 3 ist auf der nicht dargestellten anderen Seite des Dosierförderers spiegelsymmetrisch gleich.

Der Auffangboden 20 erstreckt sich, wie in den Figuren 3 und 4 und auch in Figur 2 gut erkennbar, unmittelbar unter dem Walzensieb 10, im Ausführungsbeispiel dementsprechend unmittelbar unter den Schraubenwalzen 11 bis 16. Zwischen dem Walzensieb 10 und dem Auffangboden 20, d. h. zwischen den Wendeln der Schraubenwalzen 11-16 und dem Auffangboden 20, verbleibt ein lichter Abstand, der ein Drehen der Schraubenwalzen 11-16 frei vom Auffangboden 20 und zugleich eine Förderung der durch die Sieblücken des Walzensiebs 10 auf den Auffangboden 20 gefallenen Unterkornfraktion durch die Schraubenwalzen 11-16 gewährleistet. Der Abstand ist so klein, dass die Wendeln der Schraubenwalzen 11 bis 16 in die auf dem Auffangboden 20 befindliche Unterkornfraktion eingreifen und diese bei Drehantrieb der Schraubenwalzen 11-16 auf dem Auffangboden 20 in Förderrichtung F bis zum Bodenausgaberand 29 fördern. Der Abstand kann insbesondere so klein sein, dass sich auf dem Auffangboden 20 aufgrund des Eingriffs der Wendeln dauerhaft keine Unterkornschicht bilden kann, da die Wendeln eine aufliegende Unterkornschicht, sollte sie sich lokal und temporär bilden, auf dem Auffangboden 20 in Förderung F schieben. Andererseits bedeutet dies nicht, dass keinerlei Unterkornpartikel ungeachtet ihrer Größe auf dem Auffangboden 20 liegen bleiben können.

Der Auffangboden ist mit seinen Umschlingungsabschnitten 21-26 an die Schraubenwalzen 11-16 angeschmiegt. Die Umschlingungsabschnitte 21-26 weisen an ihren den Schraubenwalzen 11-16 zugewandten Oberseiten jeweils eine Oberfläche auf, die einen an den äußeren Umfang der Wendel der zugeordneten Schraubenwalze angelegten, virtuellen Hüllumfang mit dem besagten geringen radialen Abstand, der in Figur 4 mit a bezeichnet ist, über einen Umschlingungswinkel umgibt. Günstig ist, wenn der Umschlingungswinkel mehr als 20° oder mehr als 30° oder mehr als 40° beträgt. Bevorzugt werden Umschlingungswinkel aus dem Bereich von 60° bis 150°, wobei Umschlingungswinkel von 90° und mehr besonders günstig sind.

In Figur 4 ist für den Umschlingungsabschnitt 26 in Strichlinie angedeutet, dass die Umschlingung am äußeren Umfangsrand im Vergleich zu den mittleren Umschlingungsabschnitten 21, 22 und 24 sowie dem nicht dargestellten mittleren Umschlingungsabschnitt 23 verlängert, d. h. hochgezogen, werden kann. Der äußere Umschlingungsabschnitt 25 kann auf der anderen Seite spiegelsymmetrisch in gleicher Weise verlängert sein. Hierdurch wird noch sicherer verhindert, dass Überkornpartikel an den äußeren Seitenrändern des Walzensiebs 10 geklemmt werden können. Für die beiden äußeren Umschlingungsabschnitte 25 und 26 kann der Umschlingungswinkel durchaus 180° betragen.

Die umschlingende Oberfläche des jeweiligen Umschlingungsabschnitts 21-26 kann zum Hüllumfang der zugehörigen Schraubenwalze 11-16 über den Umschlingungswinkel äquidistant sein, so dass der radiale Abstand a über den Umschlingungswinkel des jeweiligen Umschlingungsabschnitts 21-26 konstant ist.

Die Umschlingungsabschnitte 21-26 sind jeweils als eine nach oben offene Röhre geformt. Sie können im Querschnitt jeweils als Kreisringabschnitt geformt sein. Im Ausführungsbeispiel sind sie über ihre gesamte axiale Länge zylindrisch. Die Umschlingungsabschnitte 21-26 können einzeln gefertigt und in der Anordnung des Ausführungsbeispiels miteinander gefügt sein, so dass sie insgesamt den nach unten konvex gewölbten Auffangboden 20 bilden. Insgesamt wird der Auffangboden 20 auf diese Weise als ein blechartiges Flächengebilde erhalten. Im Ausführungsbeispiel besteht der Auffangboden 20 aus den Umschlingungsabschnitten 21-26. Die Umschlingungsabschnitte 21-26 erstrecken sich dementsprechend unmittelbar nebeneinander in Walzenlängsrichtung X.

In einer in Figur 5 gezeigten Modifikation weist der Dosierförderer 1 einen modifizierten Auffangboden 28 auf, der sich aus einem planen rechten Bodenabschnitt, einem in Figur 5 gezeigten planen linken Bodenabschnitt und einem ebenfalls erkennbaren planen Mittelabschnitt zusammensetzt. Der rechte Bodenabschnitt erstreckt sich unmittelbar unter der rechten Walzengruppe 11, 13, 15. Der linke Bodenabschnitt erstreckt sich unmittelbar unter der linken Walzengruppe 12, 14, 16. Der Mittelabschnitt erstreckt sich unmittelbar unter den beiden mittleren Schraubenwalzen 11 und 12, von denen die Schraubenwalze 11 zur rechten Walzengruppe und die Schraubenwalze 12 zur linken Walzengruppe gerechnet werden.

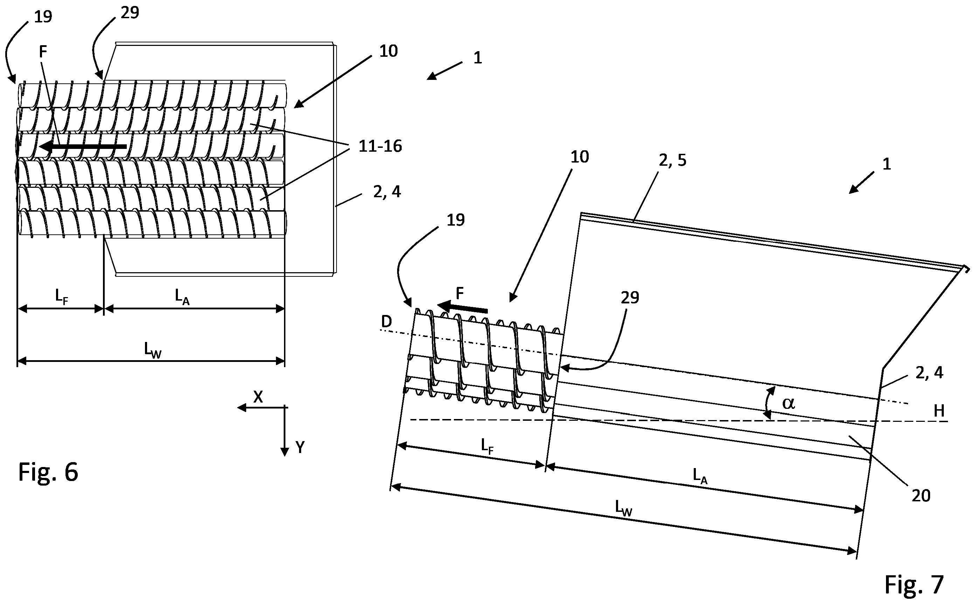

Figur 6 zeigt den Dosierförderer 1 in einer Draufsicht auf die Oberseite des Walzensiebs 10. Eingetragen sind die wirksame Länge $L_W$ der Schraubenwalzen 11-16, die im Ausführungsbeispiel wie bevorzugt gleich lang sind. Die wirksame Länge $L_W$ ist die Länge, mit der die jeweilige Schraubenwalze 11-16 mit dem Feststoffgemisch in Berührung kommt und Überkorn in Walzenlängsrichtung X fördert. Im Ausführungsbeispiel ragen die Schraubenwalzen 11-16 mit der wirksamen Länge $L_W$ jeweils in Walzenlängsrichtung X über die rückwärtige Begrenzungswand 4 bis zum freien Walzenende, wo der Siebausgabebereich 19 gebildet ist, vor. Mit $L_A$ ist die Länge bezeichnet, über die der Auffangboden 20 mit den Schraubenwalzen 11-16 in Walzenlängsrichtung X insgesamt überlappt. Die Länge $L_A$ ist zugleich auch die in Walzenlängsrichtung X gemessene Länge des Auffangbodens 20, d. h. der Auffangboden 20 reicht an seinem in Walzenlängsrichtung X rückwärtigen Ende bis zum rückwärtigen Ende des Walzensiebs 10 und erstreckt sich in Förderrichtung F bis zum Bodenausgaberand 29. Grundsätzlich kann der Auffangboden 20 gegen die Förderrichtung F über das rückwärtige Ende des Walzensiebs 10 hinaus reichen, für Vergleichszwecke wird aber auch in derartigen Modifikationen nur die Länge der Überlappung $L_A$ verwendet und im Folgenden als "Überlappungslänge $L_A$" bezeichnet. $L_F$ ist die Länge, mit der die Schraubenwalzen 11-16 jeweils in Förderrichtung F, hier axial, über den Auffangboden 20, d. h.

über dessen Bodenausgaberand 29, frei vorragen. Diese Länge des freien Vorragens wird im Folgenden als "Freilänge $L_F$" bezeichnet.

Für den Vergleich der Längen $L_W$, $L_A$ und $L_F$ wird in Figur 6 unterstellt, dass die Drehachsen der Schraubenwalzen 11-16 horizontal verlaufen.

Figur 7 zeigt den Dosierförderer 1 in einer Seitenansicht. Im Unterschied zur Anordnung der Figur 6 ist der Dosierförderer 1 in Figur 7 um eine in Querrichtung Y weisende horizontale Kippachse gekippt. Die Drehachsen D der Schraubenwalzen des Walzensiebs 10 weisen unter einem spitzen Winkel, nämlich einer Neigung $\alpha$, zur Horizontalen H. Der Dosierförderer 1 kann in einfachen Ausführungen nicht verstellbar mit einer dementsprechend unveränderbaren Neigung $\alpha$, wobei $0° \leq \alpha \leq 50°$, in oder an einem Gestell angeordnet sein. In Weiterentwicklungen kann der Dosierförderer 1 aber auch im oder am Gestell um die Kippachse verstellbar angeordnet sein, so dass die Neigung $\alpha$ verstellt werden kann. In Figur 7 sind die gleichen Längen $L_W$, $L_A$ und $L_F$ wie in Figur 6, allerdings der gekippten Ausrichtung entsprechend eingetragen.

Die wirksame Länge $L_W$ ist im Ausführungsbeispiel die Summe aus Überlappungslänge $L_A$ und Freilänge $L_F$. Die Längenverhältnisse können daher durch das Verhältnis der Freilänge $L_F$ zur Überlappungslänge $L_A$ charakterisiert werden. So entspricht es bevorzugten Ausführungen, wenn für das Verhältnis Freilänge zu Überlappungslänge zumindest im Wesentlichen gilt, dass $L_F/L_A = 1/2$. Bezogen auf die wirksame Länge $L_W$ bedeutet dies, dass die Freilänge $L_F$ ein Drittel und die Überlappungslänge $L_A$ zwei Drittel der wirksamen Länge $L_W$ der jeweiligen Schraubenwalze 11-16 ausmachen. Gute Ergebnisse werden im Hinblick auf die Gleichmäßigkeit der Förderung und damit einhergehend der Dosierung der Fördermengen von Unterkorn- und Überkornfraktion, aber auch in Bezug auf eine optional verwirklichte Trennung der beiden Fraktionen erzielt, wenn das Verhältnis $L_F/L_A$ wenigstens 1/4 oder, bevorzugter, wenigstens 1/3 beträgt. Als Untergrenze für das Verhältnis $L_F/L_A$ ist 1/5 anzusehen. Als Obergrenze wird für das Verhältnis $L_F/L_A$ ein Wert von 3 angesehen. Günstiger ist es, wenn $L_F/L_A$ nicht größer als 2 ist. Für den bevorzugten Bereich gilt $1/4 \leq L_F/L_A \leq 3/2$, noch bevorzugter $1/3 \leq L_F/L_A \leq 1$.

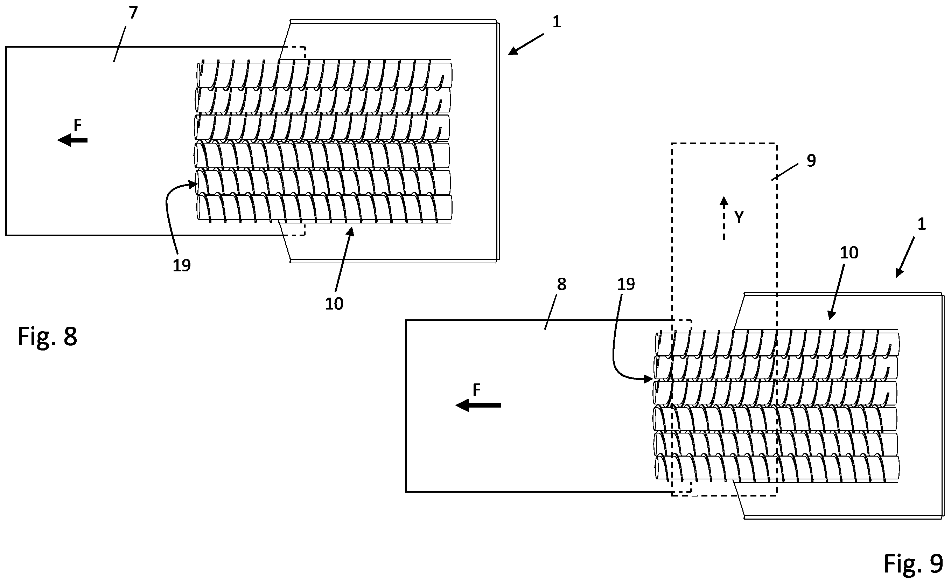

Figur 8 zeigt den Dosierförderer 1 und einen dem Dosierförderer 1 nachgeordneten Förderer 7 in einer Draufsicht auf die Oberseiten des Walzensiebs 10 und des Förderers 7. Bei dem Förderer 7 kann es sich beispielsweise um einen einfachen Bandförderer handeln. Der Förderer 7 ragt bis unter den Auffangboden 20 und ist dafür eingerichtet, die vom Auffangboden 20 fallende Unterkornfraktion und auch die im Siebausgabebereich 19 vom Walzensieb 10 fallende Überkornfraktion aufzufangen und in die Förderrichtung F gemeinsam weiterzufördern. Der Dosierförderer 1 dient lediglich der Dämpfung von Schwankungen der Fördermengen, die davon herrühren können, dass das Feststoffgemisch dem Walzensieb 10 diskontinuierlich und/oder in variierender Zusammensetzung und/oder mit anderen Unregelmäßigkeiten aufgegeben wird.

In der Anordnung der Figur 9 dient der Dosierförderer 1 nicht nur der Verringerung von Förderratenschwankungen, sondern auch der Trennung der beiden Fraktionen. Dem Dosierförderer 1 sind dementsprechend ein Überkornförderer 8 und ein Unterkornförderer 9 nachgeordnet. Der Überkornförderer 8 kann beispielsweise dem Förderer 7 der Figur 8 entsprechen. Allerdings ragt der Überkornförderer 8 nur noch bis unter den Siebausgabebereich 19 und nicht mehr bis unter den Auffangboden 20. Vom Überkornförderer 8 wird somit nur noch die im Siebausgabebereich 19 vom Walzensieb 10 fallende Überkornfraktion aufgefangen. Der Überkornförderer 8 fördert die Überkornfraktion in Förderrichtung F weiter. Der Unterkornförderer 9 erstreckt sich in Querrichtung Y über die gesamte Breite des Walzensiebs 10 und des Auffangbodens 20 und überlappt in der Draufsicht insbesondere den Bodenausgabebereich 29 über seinen gesamten Verlauf. Der Unterkornförderer 9 fängt die über den Bodenausgaberand 29 ausgetragene Unterkornfraktion auf und fördert diese in die Querrichtung Y weiter.

Im Ausführungsbeispiel der Figur 9 ist der Unterkornförderer 9 tiefer als der Überkornförderer 8 angeordnet. Der Überkornförderer 8 hat daher in Förderrichtung F gemessen einen Abstand vom Bodenausgabebereich 29. Ist der Überkornförderer 8 undurchlässig für die kleineren Überkornpartikel der Überkornfraktion, beispielsweise als dichtes Förderband ausgebildet, kann sich der Unterkornförderer 9 in Förderrichtung F auch bis unter den Siebausgabebereich 19 oder darüber hinaus erstrecken. Der Überkornförderer 8 und der Unterkornförderer 9 können grundsätzlich auch auf gleicher Höhe ohne gegenseitige Überlappung angeordnet sein. In Abwandlungen kann der Überkornförderer 8 tiefer als der Unterkornförderer 9 angeordnet sein. Ist der Unterkornförderer 9 in derartigen Ausführungen undurchlässig auch für die kleineren Partikel der Unterkornfraktion, beispielsweise als geschlossenes Förderband ausgebildet, kann der Überkornförderer 8 auch bis unter den Auffangboden 20 reichen, während der Unterkornförderer 9, wie in Figur 9 dargestellt, in Förderrichtung F vor dem Siebausgaberand 19 enden sollte.

Bezugszeichen:

1    Dosierförderer
2    Begrenzungsstruktur
3    Begrenzungswand

| 4 | Begrenzungswand |
|---|---|
| 5 | Begrenzungswand |
| 6 | - |
| 7 | Förderer |
| 8 | Überkornförderer |
| 9 | Unterkornförderer |
| 10 | Walzensieb |
| 11 | Schraubenwalze |
| 12 | Schraubenwalze |
| 13 | Schraubenwalze |
| 14 | Schraubenwalze |
| 15 | Schraubenwalze |
| 16 | Schraubenwalze |
| 17 | - |
| 18 | - |
| 19 | Siebausgabebereich |
| 20 | Auffangboden |
| 21 | Umschlingungsabschnitt |
| 22 | Umschlingungsabschnitt |
| 23 | Umschlingungsabschnitt |
| 24 | Umschlingungsabschnitt |
| 25 | Umschlingungsabschnitt |
| 26 | Umschlingungsabschnitt |
| 27 | - |
| 28 | Auffangboden |
| 29 | Bodenausgaberand |

| a | Abstand |
|---|---|
| $\alpha$ | Neigung |
| D | Walzendrehachse |
| F | Förderrichtung |
| H | Horizontale |
| $L_A$ | Überlappungslänge |
| $L_W$ | wirksame Walzenlänge |
| $L_F$ | Freilänge, axialer Überstand |
| X | Walzenlängsrichtung |
| Y | Querrichtung |

**Patentansprüche**

1. Dosierförderer zum Fördern und Dosieren eines Feststoffgemisches, der Dosierförderer umfassend:

   - -mehrere drehantreibbar nebeneinander angeordnete Schraubenwalzen (11-16), die ein Walzensieb (10) bilden, dem das Feststoffgemisch aufgebbar ist, um eine durch das Walzensieb (10) fallende Unterkornfraktion und eine auf dem Walzensieb (10) in eine Förderrichtung (F) bis in einen Siebausgabebereich (19) des Walzensiebs (10) förderbare Überkornfraktion zu erhalten, und
   - -einen unter dem Walzensieb (10) in Förderrichtung (F) bis zu einem abwärtigen Bodenausgaberand (29) erstreckten Auffangboden (20) zum Auffangen der durch das Walzensieb (10) fallenden Unterkornfraktion,
   - -wobei der Auffangboden (20) an der Unterseite des Walzensiebs (10) so dicht an die Schraubenwalzen (11-16) reicht, dass die Schraubenwalzen (11-16) die auf dem Auffangboden (20) befindliche Unterkornfraktion in Förderrichtung (F) zum Bodenausgaberand (29) fördern, wobei
   - -die Schraubenwalzen (11-16) und der Auffangboden (20) in Walzenlängsrichtung (X) bis zum Bodenausgaberand (29) insgesamt über eine Überlappungslänge ($L_A$) überlappen, und wobei
   - die Schraubenwalzen (11-16) jeweils mit einer Freilänge ($L_F$) in die zur Walzenlängsrichtung (X) parallele Förderrichtung (F) über den Bodenausgaberand (29) frei vorragen, **dadurch gekennzeichnet, dass**
   - das Verhältnis von Freilänge ($L_F$) zu Überlappungslänge ($L_A$) wenigstens 1/5 ist.

2. Dosierförderer nach dem vorhergehenden Anspruch, wobei das Walzensieb (10) in Förderrichtung (F) über den gesamten Bodenausgaberand (29) vorragt.

3. Dosierförderer nach einem der vorhergehenden Ansprüche, wobei das Verhältnis von Freilänge ($L_F$) zu Überlappungslänge ($L_A$) wenigstens 1/4 oder wenigstens 1/3, vorzugsweise 1/2 ist.

4. Dosierförderer nach einem der vorhergehenden Ansprüche, wobei das Verhältnis von Freilänge ($L_F$) zu Überlappungslänge ($L_A$) höchstens 3 oder höchstens 2 oder höchstens 1 ist.

5. Dosierförderer nach einem der vorhergehenden Ansprüche, wobei der Auffangboden (20) von Wendeln der Schraubenwalzen (11-16) einen Abstand (a) hat, der kleiner als eine radiale Höhe ist, mit der die Wendeln von einem zentralen Walzenkörper der jeweiligen Schraubenwalze radial vorragen, wobei für Schraubenwalzen mit in Walzenlängsrichtung (X) variierender radialer Höhe der Wendel die als geometrisches Mittel aus maximaler und minimaler Höhe erhaltene mittlere radiale Höhe für den Vergleich herangezogen wird.

6. Dosierförderer nach einem der vorhergehenden Ansprüche, wobei der Auffangboden (20) in Walzenlängsrichtung (X) erstreckte Umschlingungsabschnitte (21-26) aufweist, welche die Schraubenwalzen (11-16) an den Walzenunterseiten umschlingen, vorzugsweise mit einem Umschlingungswinkel von jeweils mehr als 60°.

7. Dosierförderer nach einem der vorhergehenden Ansprüche, wobei alle Schraubenwalzen (11-16) des Walzensiebs (10) von einer Lagerseite in Förderrichtung (F) frei vorragen und am freien Walzenende den Siebausgabebereich (19) bilden.

8. Dosierförderer nach einem der vorhergehenden Ansprüche, umfassend eine Begrenzungsstruktur (2) mit einer rechten Begrenzungswand (3) an einem rechten Seitenrand des Walzensiebs (10), einer linken Begrenzungswand (5) an einem linken Seitenrand des Walzensiebs (10) und eine rückwärtige Begrenzungswand (4), über welche die Schraubenwalzen (11-16) in Förderrichtung (F) vorragen, wobei die Begrenzungsstruktur (2) das Walzensieb (10) an drei Seiten einrahmt, aber in Förderrichtung (F), die mit der Walzenlängsrichtung (X) zusammenfällt, offen ist.

9. Dosierförderer nach dem vorhergehenden Anspruch, wobei die Begrenzungsstruktur (2) nach unten bis zum Auffangboden (20) oder bis nahe zum Auffangboden (20) reicht, um zu verhindern, dass die Unterkornfraktion an den Rändern und/oder am rückwärtigen Ende des Walzensiebs (10) vom Auffangboden (20) fallen kann.

10. Dosierförderer nach einem der vorhergehenden Ansprüche, umfassend einen dem Walzensieb (10) in Förderrichtung (F) nachgeordneten Überkornförderer (8), der sich bis unter den Siebausgabebereich (19) erstreckt, um die im Siebausgabebereich (19) vom Walzensieb (10) fallende Überkornfraktion aufzufangen und weiter zu fördern, und/oder einen dem Auffangboden (20) in Förderrichtung (F) nachgeordneten Unterkornförderer (9), der sich bis unter den Bodenausgaberand (29) erstreckt, um die über den Bodenausgaberand (29) fallende Unterkornfraktion aufzufangen und weiter zu fördern.

11. Dosierförderer nach einem der vorhergehenden Ansprüche, wobei die Schraubenwalzen (11-16) und der Auffangboden (20) in Förderrichtung (F) mit einer Neigung ($\alpha$) nach oben fest angeordnet oder in solch eine geneigte Position durch gemeinsames Kippen verstellbar sind.

12. Dosierförderer nach einem der vorhergehenden Ansprüche, wobei das Walzensieb (10) quer zur Förderrichtung (F) zu einem rechten Seitenrand und/oder zu einem linken Seitenrand des Walzensiebs (10) ansteigt, um zu bewirken, dass Partikel der Überkornfraktion aufgrund Schwerkraft quer zur Förderrichtung (F), vorzugsweise quer zur Walzenlängsrichtung (X), vom jeweiligen Seitenrand zurück zu einem tiefer gelegenen Bereich des Walzensiebs (10) fallen.

13. Dosierförderer nach einem der vorhergehenden Ansprüche, wobei das Walzensieb (10) und der Auffangboden (20), sowie optional die Begrenzungsstruktur (2) und/oder der Drehantrieb, als komplett montierbare Montageeinheit ausgeführt sind.

**Claims**

1. A dosing conveyor for conveying and dosing a mixture of solids, the dosing conveyor comprising:

- a plurality of helical rollers (11-16) arranged next to each other such that they can be rotary-driven and forming a roller screen (10) onto which the mixture of solids can be introduced in order to obtain an undersize-grain fraction which falls through the roller screen (10) and an oversize-grain fraction which can be conveyed on the roller screen (10) in a conveying direction (F) as far as and into a screen output region (19) of the roller screen (10); and

- a collecting floor (20), which extends below the roller screen (10) in the conveying direction (F) as far as a downward output edge (29) of the floor, for collecting the undersize-grain fraction which falls through the roller screen (10),

- wherein the collecting floor (20) extends close enough to the helical rollers (11-16) on the lower side of the roller screen (10) that the helical rollers (11-16) convey the undersize-grain fraction situated on the collecting floor (20) in the conveying direction (F) to the output edge (29) of the floor, wherein

- the helical rollers (11-16) and the collecting floor (20) overlap in the longitudinal direction (X) of the rollers as far as the output edge (29) of the floor over a total overlapping length ($L_A$), and wherein

- the helical rollers (11-16) each protrude freely beyond the output edge (29) of the floor by a free length ($L_F$) in the conveying direction (F) which is parallel to the longitudinal direction (X) of the rollers,

**characterised in that**

- the ratio of the free length ($L_F$) to the overlapping length ($L_A$) is at least 1/5.

2. The dosing conveyor according to the preceding claim, wherein the roller screen (10) protrudes beyond the entire output edge (29) of the floor in the conveying direction (F).

3. The dosing conveyor according to any one of the preceding claims, wherein the ratio of the free length ($L_F$) to the overlapping length ($L_A$) is at least 1/4 or at least 1/3 and preferably 1/2.

4. The dosing conveyor according to any one of the preceding claims, wherein the ratio of the free length ($L_F$) to the overlapping length ($L_A$) is at most 3 or at most 2 or at most 1.

5. The dosing conveyor according to any one of the preceding claims, wherein the collecting floor (20) has a distance (a) from helices of the helical rollers (11-16) which is smaller than a radial height by which the helices protrude radially from a central roller body of the respective helical roller, wherein for helical rollers having a radial height of the helix which varies in the longitudinal direction (X) of the rollers, the mean radial height obtained as the geometric mean of the maximum and minimum height is adduced for the comparison.

6. The dosing conveyor according to any one of the preceding claims, wherein the collecting floor (20) comprises looping portions (21-26) which extend in the longitudinal direction (X) of the rollers and loop around the helical rollers (11-16) on the lower sides of the rollers, preferably over a looping angle of more than 60° in each case.

7. The dosing conveyor according to any one of the preceding claims, wherein all of the helical rollers (11-16) of the roller screen (10) protrude freely from a bearing side in the conveying direction (F) and form the screen output region (19) at the free end of the rollers.

8. The dosing conveyor according to any one of the preceding claims, comprising a boundary structure (2) comprising a right-hand boundary wall (3) on a right-hand side edge of the roller screen (10), a left-hand boundary wall (5) on a left-hand side edge of the roller screen (10), and a rearward boundary wall (4) from which the helical rollers (11-16) protrude in the conveying direction (F), wherein the boundary structure (2) encloses the roller screen (10) on three sides, but is open in the conveying direction (F) which coincides with the longitudinal direction (X) of the rollers.

9. The dosing conveyor according to the preceding claim, wherein the boundary structure (2) extends downwards as far as the collecting floor (20) or close to the collecting floor (20) in order to prevent the undersize-grain fraction from being able to fall from the collecting floor (20) at the edges and/or at the rearward end of the roller screen (10).

10. The dosing conveyor according to any one of the preceding claims, comprising an oversize-grain conveyor (8) which is arranged downstream of the roller screen (10) in the conveying direction (F) and extends as far as and below the screen output region (19) in order to collect and convey onwards the oversize-grain fraction which falls from the roller screen (10) in the screen output region (19), and/or an undersize-grain conveyor (9) which is arranged downstream of the collecting floor (20) in the conveying direction (F) and extends as far as and below the output edge (29) of the floor in order to collect and convey onwards the undersize-grain fraction which falls over the output edge (29) of the floor.

11. The dosing conveyor according to any one of the preceding claims, wherein the helical rollers (11-16) and the collecting floor (20) are fixedly arranged at an upward inclination ($\alpha$) in the conveying direction (F) or can be adjusted into such an inclined position by being jointly tilted.

12. The dosing conveyor according to any one of the preceding claims, wherein the roller screen (10) rises transversely to the conveying direction (F) towards a right-hand side edge and/or left-hand side edge of the roller screen (10), so that particles of the oversize-grain fraction fall transversely to the conveying direction (F), preferably transversely to the longitudinal direction (X) of the rollers, from the respective side edge back towards a lower region of the roller screen (10) due to gravity.

13. The dosing conveyor according to any one of the preceding claims, wherein the roller screen (10) and the collecting floor (20), and optionally also the boundary structure (2) and/or the rotary drive, are embodied as an assembly unit which can be fully assembled.

## Revendications

1. Convoyeur doseur pour transporter et doser un mélange de matières solides, le convoyeur doseur comprenant :

   - une pluralité de rouleaux hélicoïdaux (11-16) disposés côte à côte de manière à pouvoir être entraînés en rotation, qui forment un tamis à rouleaux (10) auquel le mélange de matières solides peut être introduit afin d'obtenir une fraction de grains plus petits tombant à travers le tamis à rouleaux (10) et une fraction de grains plus gros transportable sur le tamis à rouleaux (10) en direction de transport (F) jusqu'à une zone de déchargement (19) du tamis du tamis à rouleaux (10), et
   - un fond collecteur (20) s'étendant sous le tamis à rouleaux (10) en direction de transport (F) jusqu'à un bord de déchargement (29) du fond dirigé vers le bas pour collecter la fraction de grains plus petits tombant à travers le tamis à rouleaux (10),
   - le fond collecteur (20) s'étendant si près des rouleaux hélicoïdaux (11-16) sur la face inférieure du tamis à rouleaux (10) que les rouleaux hélicoïdaux (11-16) transportent la fraction de grains plus petits située sur le fond collecteur (20) en direction de transport (F) jusqu'au bord de déchargement (29) du fond,
   - les rouleaux hélicoïdaux (11-16) et le fond collecteur (20) se chevauchant en direction longitudinale (X) des rouleaux jusqu'au bord de déchargement (29) du fond sur une longueur de chevauchement totale ($L_A$), et
   - les rouleaux hélicoïdaux (11-16) dépassant chacun librement le bord de déchargement (29) du fond par une longueur libre ($L_F$) en direction de transport (F) parallèle à la direction longitudinale (X) des rouleaux,
   **caractérisé en ce que**
   - le rapport entre la longueur libre ($L_F$) et la longueur de chevauchement ($L_A$) est d'au moins 1/5.

2. Convoyeur doseur selon la revendication précédente, dans lequel le tamis à rouleaux (10) dépasse tout le bord de déchargement (29) du fond en direction de transport (F).

3. Convoyeur doseur selon l'une quelconque des revendications précédentes, dans lequel le rapport entre la longueur libre ($L_F$) et la longueur de chevauchement ($L_A$) est d'au moins 1/4 ou d'au moins 1/3 et de préférence de 1/2.

4. Convoyeur doseur selon l'une quelconque des revendications précédentes, dans lequel le rapport entre la longueur libre ($L_F$) et la longueur de chevauchement ($L_A$) est d'au plus 3 ou d'au plus 2 ou d'au plus 1.

5. Convoyeur doseur selon l'une quelconque des revendications précédentes, dans lequel le fond collecteur (20) présente une distance (a) des hélices des rouleaux hélicoïdaux (11-16) qui est inférieure à une hauteur radiale par laquelle les hélices font saillie radialement à partir d'un corps de rouleau central du rouleau hélicoïdal respectif, la hauteur radiale moyenne obtenue comme moyenne géométrique de la hauteur maximale et minimale étant utilisée pour la comparaison en cas des rouleaux hélicoïdaux présentant une hauteur radiale de l'hélice variant en direction longitudinale (X) des rouleaux.

6. Convoyeur doseur selon l'une quelconque des revendications précédentes, dans lequel le fond collecteur (20) présente des sections d'enroulement (21-26) s'étendant en direction longitudinale (X) des rouleaux, qui s'enroulent autour des rouleaux hélicoïdaux (11-16) sur les faces inférieures des rouleaux, de préférence par un angle d'enroulement de plus de 60° dans chaque cas.

7. Convoyeur doseur selon l'une quelconque des revendications précédentes, dans lequel tous les rouleaux hélicoïdaux (11-16) du tamis à rouleaux (10) font saillie librement à partir d'un côté de palier en direction de transport (F) et forment la zone de déchargement (19) du tamis à l'extrémité libre des rouleaux.

8. Convoyeur doseur selon l'une quelconque des revendications précédentes, comprenant une structure de délimitation (2) y comprise une paroi de délimitation droite (3) sur un bord latéral droit du tamis à rouleaux (10), une paroi de délimitation gauche (5) sur un bord latéral gauche du tamis à rouleaux (10) et une paroi de délimitation arrière (4) à partir de laquelle les rouleaux hélicoïdaux (11-16) font saillie en direction de transport (F), la structure de délimitation (2) encadrant le tamis à rouleaux (10) sur trois côtés, mais étant ouverte en direction de transport (F) coïncidant avec la direction longitudinale (X) des rouleaux.

9. Convoyeur doseur selon la revendication précédente, dans lequel la structure de limitation (2) s'étend vers le bas jusqu'au fond collecteur (20) ou à proximité du fond collecteur (20) afin d'empêcher la fraction de grains plus petits de tomber du fond collecteur (20) au niveau des bords et / ou de l'extrémité arrière du tamis à rouleaux (10).

10. Convoyeur doseur selon l'une quelconque des revendications précédentes, comprenant un convoyeur (8) de grains plus gros disposé en aval du tamis à rouleaux (10) en direction de transport (F) et s'étendant jusqu'en dessous de la zone de déchargement (19) du tamis afin de collecter et de transporter ultérieurement la fraction de grains plus gros tombant du tamis à rouleaux (10) dans la zone de déchargement (19) du tamis, et / ou un convoyeur de grains plus petits (9) disposé en aval du fond collecteur (20) en direction de transport (F) et s'étendant jusqu'en dessous du bord de déchargement (29) du fond afin de collecter et de transporter ultérieurement la fraction de grains plus petits tombant sur le bord de déchargement (29) du fond.

11. Convoyeur doseur selon l'une quelconque des revendications précédentes, dans lequel les rouleaux hélicoïdaux (11-16) et le fond collecteur (20) sont disposés de manière fixe en direction de transport (F) à une inclinaison ($\alpha$) vers le haut ou sont réglables dans une telle position inclinée en faisant les basculer conjointement.

12. Convoyeur doseur selon l'une quelconque des revendications précédentes, dans lequel le tamis à rouleaux (10) s'élève transversalement à la direction de transport (F) jusqu'à un bord latéral droit et / ou jusqu'à un bord latéral gauche du tamis à rouleaux (10) afin de faire retomber des particules de la fraction de grains plus gros depuis le bord latéral respectif vers une zone inférieure du tamis à rouleaux (10) transversalement à la direction de transport (F), de préférence transversalement à la direction longitudinale (X) des rouleaux, sous l'effet de la force de gravité.

13. Convoyeur doseur selon l'une quelconque des revendications précédentes, dans lequel le tamis à rouleaux (10) et le fond collecteur (20), ainsi qu'éventuellement la structure de limitation (2) et / ou l'entraînement rotatif, sont réalisés comme une unité d'assemblage entièrement assemblable.

Fig. 1

Fig. 2

Fig. 4

Fig. 5

Fig. 3

Fig. 7

Fig. 6

Fig. 8

Fig. 9

EP 3 760 322 B1

**EP 3 760 322 B1**

**IN DER BESCHREIBUNG AUFGEFÜHRTE DOKUMENTE**

**In der Beschreibung aufgeführte Patentdokumente**

- EP 2914386 A
- DE 3926451 C1

- US 731073 A